# EUROPÄISCHE PATENTANMELDUNG

(11) **EP 1 170 071 A2**
(43) Veröffentlichungstag der Anmeldung: **09.01.2002**
(21) Anmeldenummer: 01250135.9
(22) Anmeldetag: 18.04.2001
(51) Int. Cl.: B21D 39/04, B25B 27/00

(54) **Verfahren zur Herstellung einer Rohrpressverbindung**

(30) Priorität: 16.06.2000 DE 10029761
(71) Anmelder: Mapress GmbH & Co. KG, 40764 Langenfeld (DE)
(72) Erfinder: Speckemeyer, Jens, 45475 Mulheim (DE)
(74) Vertreter: Meissner, Peter E., Dipl.-Ing.

(57) **Zusammenfassung**

Die Erfindung betrifft ein Verfahren zur Herstellung einer Rohrpressverbindung mit einem Pressfittingelement und einem darin einschiebbaren bzw. darauf aufschiebbaren Leitungsrohr, bei dem im Verbindungsbereich ein Presswerkzeug in geöffneter Stellung angesetzt und durch Aktivierung eines mit dem Presswerkzeug verbindbaren, eine bestimmte Verpressarbeit erzeugenden Antriebes die Rohrpressverbindung durch Schließen des Presswerkzeuges hergestellt wird. Dabei wird die zur Verpressung erforderliche Verpressarbeit (Kraft x Weg) des Antriebes durch mehr als einen Hub aufgebracht.

Ferner betrifft die Erfindung eine Vorrichtung zur Durchführung des Verfahrens mit einer Antriebseinrichtung und einem daran angeordneten Aufnehmer zum Einstecken eines Presswerkzeuges, wobei zwischen dem Aufnehmer (6) einer Standard-Antriebseinrichtung (1) und dem für Nennweiten gleich größer 65 mm ausgelegten Presswerkzeug (9,12,25) ein überbrückendes Mittel angeordnet ist.

## Beschreibung

Die Erfindung betrifft ein Verfahren zur Herstellung einer Rohrpressverbindung mit einem Pressfittingelement und einem darin einschiebbaren bzw. darauf aufschiebbaren Leitungsrohr gemäß dem Oberbegriff des Patentanspruches 1.

Die früher im Sanitär- und Heizungsbereich übliche Technik eine Rohrverbindung mittels Gewinderohre oder durch Schweißen oder Löten herzustellen wurde in den letzten Jahren mehr und mehr durch die sich durchsetzende Verpresstechnik abgelöst (DE-AS 11 87870; DE-OS 27 25 280). Bei dieser Verpresstechnik wird ein Pressfittingelement mit einem darin einschiebbaren Leitungsrohr durch Verpressen unlösbar miteinander verbunden. Dazu wird ein Presswerkzeug, im Regelfall aus zwei Pressbacken bestehend, in geöffneter Stellung im Verbindungsbereich angesetzt und durch Aktivierung eines mit dem Presswerkzeug verbindbaren Antriebs (elektrisch oder hydraulisch) die Rohrpressverbindung durch Schließen des Presswerkzeuges hergestellt. Anfänglich war diese Verpresstechnik auf den Abmessungsbereich von 12 mm bis 54 mm beschränkt (s. Firmenprospekt Viega "profipress" 3/95, Seite 5). Durch Weiterentwicklung konnte die Verpresstechnik auf den Abmessungsbereich 65 mm bis 100 mm ausgeweitet werden (s. Firmenprospekt mapress, Lieferprogramm Sanitär Heizung September 1998, Seite 31). Da die zum Schließen des Presswerkzeuges erforderliche Kraft mit der Abmessung proportional ansteigt, musste ein neuer Antrieb entwickelt werden, da die in den üblichen Antrieben in Form von Presszangen erzeugbare Kraft nicht mehr ausreichte. Beispielsweise wurde ein Hydraulikaggregat als neuer Antrieb entwickelt, der in der Lage ist, die erforderlichen Schließkräfte für die großen Abmessungen zu erzeugen. Dieses Gerät ist im Vergleich zu den Presszangen teuer, so dass sich eine Anschaffung dieses Gerätes nur für Firmen lohnt, die die großen Abmessungen im Bereich von 65 mm bis 100 mm in großen Stückzahlen verlegen. Dies gilt in erster Linie für den industriellen Bereich. Ein kleiner Handwerksbetrieb, der die größeren Abmessungen nur hin und wieder einmal verlegt, wird kaum geneigt sein, einen teuren Antrieb sich anzuschaffen, sondern wird versuchen, entweder sich ein solches Gerät zu leihen oder die Verlegung des Leitungsabschnittes mit der großen Abmessung durch eine andere Firma erledigen zu lassen. Dieser Zustand ist für eine Vielzahl von Handwerksbetrieben unbefriedigend, die möglichst flexibel die Verlegung aller vom Markt geforderten Abmessungen anbieten möchte.

Aufgabe der Erfindung ist es, ein Verfahren zur Herstellung einer Rohrpressverbindung anzugeben, das es ermöglicht mit den im Markt stark vertretenen Standard-Antriebseinrichtung auch größere Nennweiten im Bereich von 65 bis 100 mm ohne Probleme verpressen zu können.

Diese Aufgabe wird ausgehend vom Oberbegriff in Verbindung mit den kennzeichnenden Merkmalen des Anspruches 1 gelöst. Vorteilhafte Weiterbildungen sowie eine Vorrichtung zur Durchführung des Verfahrens sind jeweils Gegenstand von Unteransprüchen.

Nach der Lehre der Erfindung wird die zur Verpressung erforderliche Verpressarbeit (Kraft x Weg) des Antriebes durch mehr als einen Hub aufgebracht. Vorzugsweise wird die Kraft des Antriebes konstant gehalten und der längere erforderliche Weg schrittweise durch mehrere Hübe aufgebracht. Alternativ ist es auch möglich, die durch den Antrieb erzeugbare Endkraft zum Schließen des Presswerkzeuges durch Anordnung eines Hebelmechanismus zu verstärken. Der Hebelmechanismus kann ein Flaschenzug, eine Ratsche, ein Pumpensystem oder dergleichen sein.

Das erfindungsgemäße Verfahren kann man beispielsweise in der Weise realisieren, dass man zwischen der Standard-Antriebseinrichtung und dem für große Nennweiten ausgelegten Presswerkzeug ein überbrückendes Mittel anordnet. Zum einen könnte das überbrückende Mittel dazu dienen, den Abmessungssprung zum gleichen Presswerkzeugtyp und zum anderen den Wechsel zu einem anderen Presswerkzeugtyp zum Beispiel Pressschlinge zu überbrücken. Zum letztgenannten Begriff Pressschlinge ist noch anzumerken, dass dieses aus mehreren Pressgliedern bestehende Presswerkzeug überwiegend für die Verpressung der großen Abmessungen eingesetzt wird. Auf die Vorteile der Anwendung einer Pressschlinge braucht hier nicht näher eingegangen werden, da dies hinlänglich bekannt ist (EP 0 671 984 B1).

Weitere Merkmale, Vorteile und Einzelheiten der Erfindung ergeben sich aus der nachfolgenden Beschreibung von in einer Zeichnung dargestellten Ausführungsbeispiele.

### Es zeigen:

- Figur 1a: in einer Längsansicht ein erstes Ausführungsbeispiel einer erfindungsgemäß ausgebildeten Vorrichtung.
- Figur 1b: eine Draufsicht von Figur 1
- Figur 2a: in einer Längsansicht den Adapter
- Figur 2b: eine Draufsicht von Figur 2a
- Figur 3a: in einer Längsansicht die Pressbacke
- Figur 3b: eine Draufsicht von Figur 3a
- Figur 4a: in einer Längsansicht ein anders gestalteter Adapter
- Figur 4b: eine Draufsicht von Figur 4a
- Figur 5: in einer Längsansicht ein zweites Ausführungsbeispiel

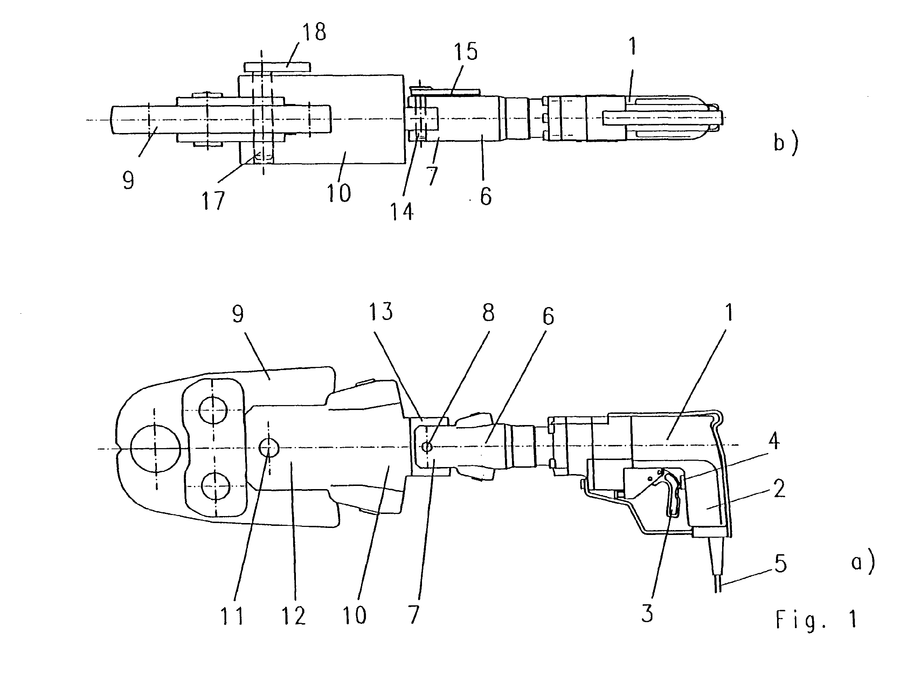

In Figur 1a ist in einer Längsansicht und in Figur 1b in einer Draufsicht ein erstes Ausführungsbeispiel einer erfindungsgemäß ausgebildeten Vorrichtung dargestellt. Diese besteht aus einer Antriebseinrichtung 1, die wahlweise rein elektrisch, elektrisch-mechanisch oder elektrisch-hydraulisch betreibbar ist. Der Endbereich der Antriebseinrichtung 1 ist als Handgriff 2 ausgebildet mit einem bügelartigen Schalthebel 3 zum Betätigen des Ein-Aus-Schalters 4. Angedeutet ist durch ein Kabel 5 die Zuleitung der elektrischen Energie für die Antriebseinrichtung 1. Im vorderen Endbereich der Antriebseinrichtung 1 ist ein Aufnehmer 6 befestigt. Dieser Aufnehmer 6 ist am freien Ende als gabelartiger Abschnitt 7 ausgebildet, so dass ein Steg des Presswerkzeuges in diesen gabelartigen Abschnitt 7 einsteckbar ist. Die Sicherung erfolgt über einen durch fluchtgleiche Öffnungen 8 des gabelartigen Abschnittes 7 und des Steges hindurchsteckbaren Bolzen 14. Damit der Bolzen 14 nicht verloren geht und in einfacher Weise bestätigt werden kann, ist an einem Ende ein Hebel 15 angeordnet.

Die hier dargestellte Antriebseinrichtung 1 ist ausgelegt für Pressbacken im Nennweitenbereich von 12 bis 54 mm. Das gilt sowohl für das erforderliche Arbeitsvermögen (Kraft x Weg) der Antriebseinheit 1 als auch für die Größe und Form der gabelartigen Abschnittes 7 zur Aufnahme der Pressbacken.

Die hier dargestellte Pressbacke 9 soll beispielsweise für die Verpressung einer Nennweite von 80 mm ausgelegt sein. Diese wäre auf den gabelartigen Abschnitt 7 des Aufnehmers 6 der kleinen Antriebseinheit 1 nicht aufsteckbar. Aus diesem Grund ist erfindungsgemäß zwischen Antriebseinrichtung 1 und Pressbacke 9 ein Adapter 10 angeordnet. Dieser Adapter 10 ist ähnlich dem Aufnehmer 6 der Antriebseinrichtung 1 ausgebildet. Auch dieser Adapter 10 weist im vorderen Endbereich einen gabelartigen Abschnitt 12 auf, in die die große Pressbacke 9, wie bereits zuvor beschrieben, einsteckbar und sicherbar ist. Dazu weist der gabelartige Abschnitt 12 Öffnungen 11 auf, die mit Öffnungen 20 der Stege 19,19' der Pressbacke 9 fluchten. Der rechte Endbereich des Adapters 10 ist als Steg 13 ausgebildet, damit dieser in den gabelartigen Abschnitt 7 des Aufnehmers 6 einsteckbar ist.

Die Sicherung erfolgt über einen Bolzen 17, der durch die Öffnungen 11 des Adapters und durch die Öffnungen 20 der Stege 19,19' der Pressbacke 9 steckbar ist. Zur Betätigung ist an einem Ende des Bolzens 17 ein Hebel 18 angeordnet.

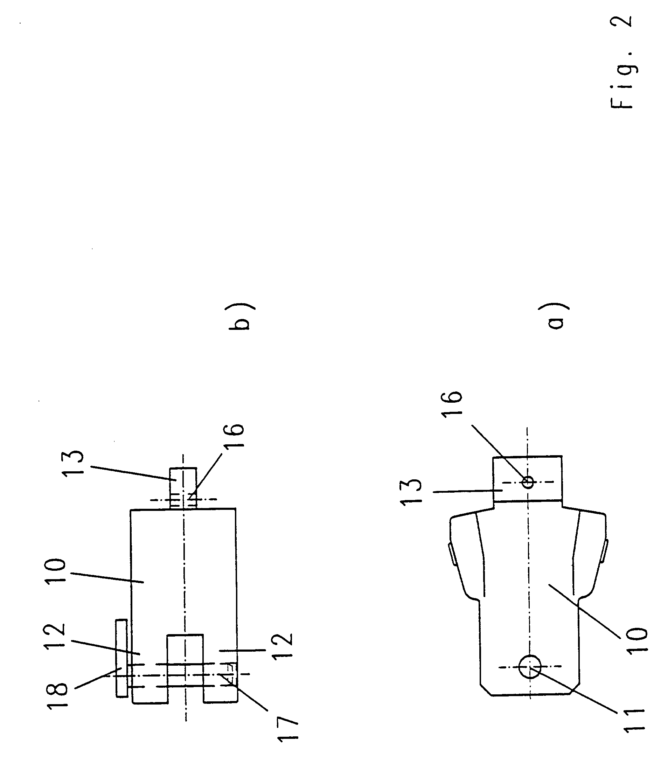

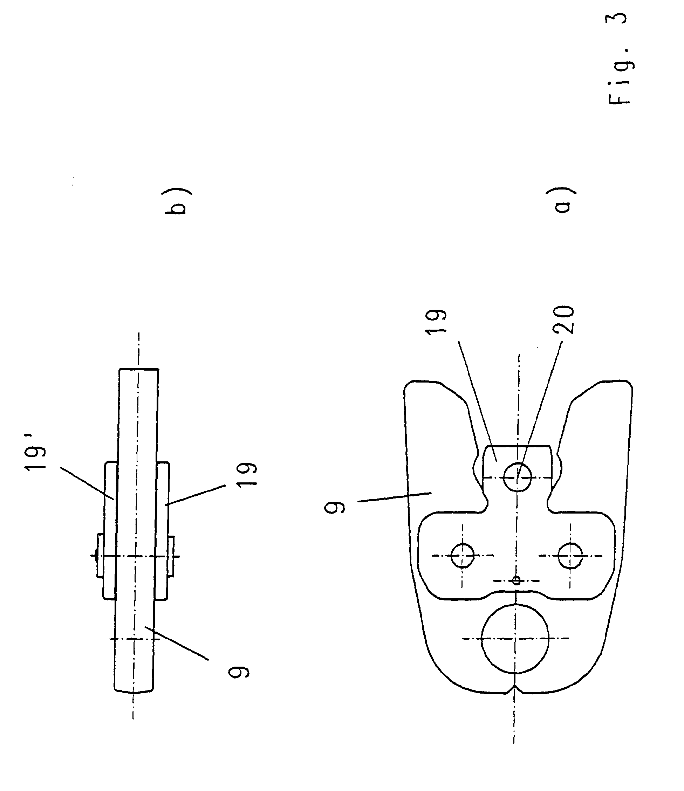

In den Figuren 2 und 3 sind in einer Längsansicht und in einer Draufsicht der Adapter 10 und die große Pressbacke 9 als Einzelteil dargestellt.

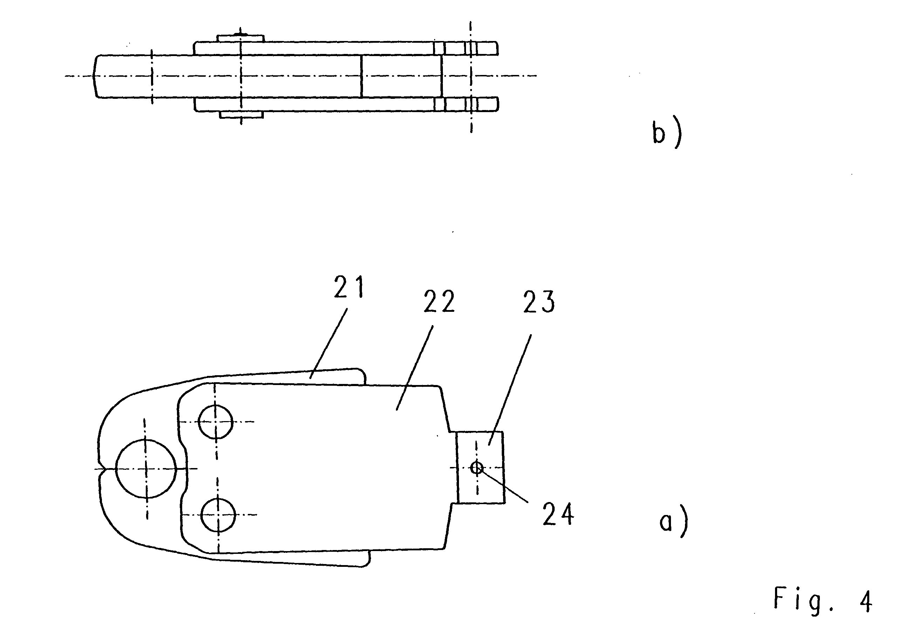

In Figur 4a,b ist in einer Längsansicht und in einer Draufsicht eine Pressbacke 21 dargestellt, deren Steg als Adapterelement 22 ausgebildet ist. Der rechte Endbereich ist als Steg 23 ausgebildet und zwar so, dass er in den Aufnehmer 6 einer üblichen Antriebseinrichtung 1 einsteckbar ist.

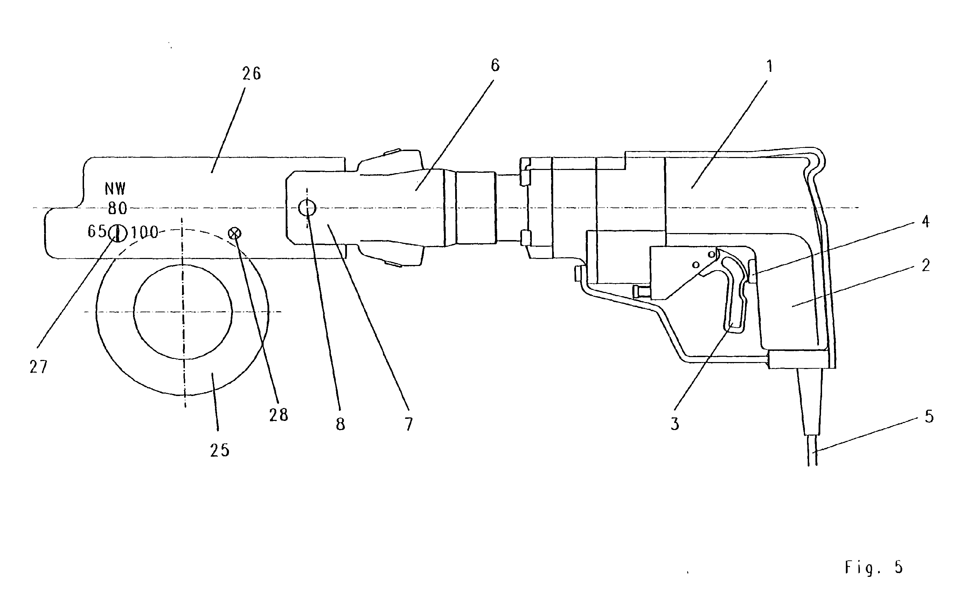

Figur 5 zeigt in einer Längsansicht ein zweites Ausführungsbeispiel, wobei für gleiche Teile gleiche Bezugszeichen gewählt worden sind. Die Antriebseinrichtung 1 und auch der Aufnehmer 6 sind vergleichbar ausgebildet wie in Figur 1a,b dargestellt. Statt einer Pressbacke ist in diesem Ausführungsbeispiel eine Pressschlinge 25 vorgesehen, die hier nur skizzenhaft angedeutet ist. Die Hubbewegung der Antriebseinrichtung 1 muss über einen Umsetzer 26 in eine Schließbewegung der Pressschlinge 25 umgesetzt werden. Der Umsetzer 26 ist mit einem Wählschalter 27 versehen, um ihn auf hier drei verschiedene Nennweiten 65 mm, 80 mm, 100 mm einstellen zu können. Die erfolgte Verpressung, d. h. das vollständige Schließen der Pressschlinge 25 wird durch ein Aufleuchten eine Anzeigenlampe 28 kenntlich gemacht.

### Bezugszeichenliste

| | |
|---|---|
| 1 | Antriebseinrichtung |
| 2 | Handgriff |
| 3 | Bügelartiger Schalthebel |
| 4 | Ein-Aus-Schalter |
| 5 | Kabel |
| 6 | Aufnehmer |
| 7 | Gabelartiger Abschnitt des Aufnehmers |
| 8 | Öffnungen Aufnehmer |
| 9 | Pressbacke |
| 10 | Adapter |
| 11 | Öffnungen Adapter |
| 12 | Gabelartiger Abschnitt des Adapters |
| 13 | Steg des Adapters |
| 14 | Bolzen |
| 15 | Hebel |
| 16 | Öffnung Steg Adapter |
| 17 | Bolzen |
| 18 | Hebel |
| 19,19' | Steg Pressbacke |
| 20 | Öffnungen Steg Pressbacke |
| 21 | Pressbacke |
| 22 | Adapterelement |
| 23 | Steg des Adapterelementes |
| 24 | Öffnung |
| 25 | Pressschlinge |
| 26 | Umsetzer |
| 27 | Wählschalter |
| 28 | Anzeigenlampe |

## Patentansprüche

1. Verfahren zur Herstellung einer Rohrpressverbindung mit einem Pressfittingelement und einem darin einschiebbaren bzw. darauf aufschiebbaren Leitungsrohr, bei dem im Verbindungsbereich ein Presswerkzeug in geöffneter Stellung angesetzt und durch Aktivierung eines mit dem Presswerkzeug verbindbaren, eine bestimmte Verpressarbeit erzeugenden Antriebes die Rohrpressverbindung durch Schließen des Presswerkzeuges hergestellt wird,
**dadurch gekennzeichnet,**
**dass** die zur Verpressung erforderliche Verpressarbeit (Kraft x Weg) des Antriebes durch mehr als einen Hub aufgebracht wird.

2. Verfahren nach Anspruch 1,
**dadurch gekennzeichnet,**
**dass** bei konstanter oder variabler Kraft des Antriebes der erforderliche Weg durch mehr als einen Hub aufgebracht wird.

3. Verfahren nach Anspruch 1,
**dadurch gekennzeichnet,**
**dass** die durch den Antrieb erzeugbare Endkraft zum Schließen des Presswerkzeuges durch Ausnutzung eines Hebelmechanismus verstärkt wird.

4. Vorrichtung zur Durchführung des Verfahrens nach Anspruch 1 mit einer Antriebseinrichtung und einem daran angeordneten Aufnehmer zum Einstecken eines Presswerkzeuges,
**dadurch gekennzeichnet,**
**dass** zwischen dem Aufnehmer (6) einer Standard-Antriebseinrichtung (1) und dem für Nennweiten gleich größer 65 mm ausgelegten Presswerkzeug (9,12,25) ein überbrückendes Mittel angeordnet ist.

5. Vorrichtung nach Anspruch 4,
**dadurch gekennzeichnet,**
**dass** das überbrückende Mittel als Adapter (10) ausgebildet, der in den Aufnehmer (6) einsteckbar und zur Aufnahme einer für große Nennweiten ausgelegten Pressbacke (9) geeignet ist.

6. Vorrichtung nach Anspruch 5,
**dadurch gekennzeichnet,**
**dass** der Adapter (10) wie ein Aufnehmer (6) ausgebildet ist mit einem am vorderen Ende gabelartig ausgebildeten Abschnitt (12) und mit einem Steg (13) an dem dem Aufnehmer (6) zugewandten Ende.

7. Vorrichtung nach Anspruch 4,
**dadurch gekennzeichnet,**
**dass** das überbrückende Mittel als Adapterelement (22) ausgebildet ist, das Bestandteil einer für große Nennweiten ausgelegten Pressbacke (21) ist.

8. Vorrichtung nach Anspruch 7,
**dadurch gekennzeichnet,**
**dass** das Adapterelement (22) an dem dem Aufnehmer (6) zugewandten Ende einen Steg (23) aufweist.

9. Vorrichtung nach Anspruch 4,
**dadurch gekennzeichnet,**
**dass** das überbrückende Element als Umsetzer (26) ausgebildet ist, der die Hubbewegung der Antriebseinrichtung (1) in eine Schließbewegung für eine Pressschlinge (25) umsetzen kann.

10. Vorrichtung nach Anspruch 9,
**dadurch gekennzeichnet,**
**dass** der Umsetzer (6) mit einem Wählschalter (27) für verschiedene Nennweiten versehen ist.

11. Vorrichtung nach Anspruch 9 und 10,
**dadurch gekennzeichnet,**
**dass** der Umsetzer (26) mit einer das Ende der Verpressung signalisierenden Anzeigenlampe (28) versehen ist.

12. Vorrichtung nach einem der Ansprüche 1-11,
**dadurch gekennzeichnet,**
**dass** das überbrückende Mittel einen Hebelmechanismus zur Verstärkung der Presskraft der Antriebseinrichtung (1) aufweist.

13. Vorrichtung nach Anspruch 12,
**dadurch gekennzeichnet,**
**dass** der Hebelmechanismus ein Flaschenzug ist.

14. Vorrichtung nach Anspruch 12,
**dadurch gekennzeichnet,**
**dass** der Hebelmechanismus eine Ratsche ist.

15. Vorrichtung nach Anspruch 12,
**dadurch gekennzeichnet,**
**dass** der Hebelmechanismus ein Pumpensystem ist.
